(19) **Europäisches Patentamt / European Patent Office / Office européen des brevets**

(11) **EP 3 040 007 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**16.06.2021 Patentblatt 2021/24**

(45) Hinweis auf die Patenterteilung:
**22.08.2018 Patentblatt 2018/34**

(21) Anmeldenummer: **15197964.8**

(22) Anmeldetag: **04.12.2015**

(51) Int Cl.:
*A47L 13/16* *(2006.01)*    *D06M 11/11* *(2006.01)*
*D06M 11/56* *(2006.01)*    *D06M 13/144* *(2006.01)*
*D06M 13/148* *(2006.01)*    *D06M 15/03* *(2006.01)*
*D06M 15/09* *(2006.01)*    *D06M 15/356* *(2006.01)*
*D06M 15/263* *(2006.01)*    *D06M 15/267* *(2006.01)*
*D06M 15/507* *(2006.01)*    *D06M 16/00* *(2006.01)*

(54) **BIOCID-FREIES, VORBEFEUCHTETES SCHWAMMTUCH**

BIOCIDE-FREE, PREWETTED SPONGE CLOTH

TISSU EPONGE PRÉ-HUMIDIFIÉ SANS BIOCIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014 DE 102014019540**

(43) Veröffentlichungstag der Anmeldung:
**06.07.2016 Patentblatt 2016/27**

(73) Patentinhaber: **Kalle GmbH**
**65203 Wiesbaden (DE)**

(72) Erfinder:
- **Mans, Leo**
  **65203 Wiesbaden (DE)**
- **Tüschen, Norbert**
  **65203 Wiesbaden (DE)**
- **Sklorz, Marian Peter**
  **65203 Wiesbaden (DE)**

(74) Vertreter: **Plate, Jürgen**
**Plate Schweitzer Zounek**
**Patentanwälte**
**Rheingaustrasse 196**
**65203 Wiesbaden (DE)**

(56) Entgegenhaltungen:
**EP-A2- 2 363 024**    **WO-A1-2006/010273**
**WO-A2-2009/085570**    **DE-U1- 29 618 058**

- **Mickey Parish: "How do salt and sugar prevent microbial spoilage?", , 21. Februar 2006 (2006-02-21), XP055275974, Gefunden im Internet: URL:http://www.scientificamerican.com/article/how-do-salt-and-sugar-pre/ [gefunden am 2016-05-27]**

EP 3 040 007 B2

**Beschreibung**

Die Erfindung betrifft ein vorbefeuchtetes, biozidfrei ausgerüstetes Schwammtuch auf der Basis von regenerierter Cellulose, das mit innenliegenden Fasern und/oder einem Netz mechanisch verstärkt ist.

Schwammtücher auf Basis von regenerierter Cellulose mit einer mechanischen Verstärkung aus Fasern und/oder einem Netz sind bekannt (s. EP 2 368 936 A2). Trockene Schwammtücher dieser Art sind relativ hart, solche mit Netzverstärkung lassen sich sogar durch Biegen brechen. Von den Verbrauchern werden die relativ weichen, vorbefeuchteten Schwammtücher den trockenen, harten vorgezogen. Diese haben zudem relativ mehr Volumen und einen weichen Griff. Dazu werden die Schwammtücher allgemein mit einer wäßrigen Lösung eines hygroskopisch wirkenden Salzes, insbesondere mit einer Magnesiumchlorid-Lösung behandelt. Nachteilig an solchen vorbefeuchteten Schwammtüchern ist jedoch deren Neigung zu Schimmelbefall, besonders wenn sie sich in einer luftdichten Folienverpackung befinden. Um dem zu begegnen sind vorbefeuchtete Schwammtücher bisher mit einem Biozid ausgerüstet worden. Diese Substanz wird dabei im allgemeinen der Magnesiumchlorid-Lösung zugesetzt. Das Magnesiumchlorid, wie auch ein Teil des Biozids werden mit dem ersten Gebrauch des Schwammtuches ausgewaschen. Dennoch muß das Vorhandensein eines solchen Wirkstoffs, oder allgemeiner eines Biocids, auf der Verkaufsverpackung des Schwammtuchs zukünftig vermerkt werden.

Das kann ein Verkaufshindernis darstellen. Die Verwendung von Bioziden in Schwammtüchern muß zudem zugelassen werden, wobei es eine deutlich restriktive Tendenz bei der Zulassung gibt.

In der DE 296 18 058 U1 sind nach dem Viskoseverfahren hergestellte Schwammtücher offenbart, die mit einem Biozid ausgerüstet sind. Die Schwammtücher können vorbefeuchtet sein, insbesondere mit einer Magnesiumchlorid-Lösung. Bekannt ist weiterhin eine Sterilisation von trockenen Schwammtüchern mit Gammastrahlen oder Peroxiden.

Es besteht daher die Aufgabe, ein vorbefeuchtetes Schwammtuch zur Verfügung zu stellen, das auf andere Weise als mit einem Biozid gegen den Befall mit Schimmelpilzen und anderen Mikroorganismen geschützt ist. "Geschützt" meint dabei, dass die Mikroorganismen abgetötet werden oder zumindest deren Wachstum gehemmt wird.

Wesentlich für das Wachstum von Mikroorganismen ist das Vorhandensein von aktivem, freiem Wasser im Schwammtuch. Ein Maß für das frei verfügbare Wasser in einem Material stellt der $a_w$-Wert dar. Er ist definiert als Quotient des Wasserdampfdrucks des Materials, dividiert durch den Wasserdampfdruck des Wassers, gemessen bei jeweils der gleichen Temperatur.

Der $a_w$-Wert liegt zwischen 0 und 1, wobei reines Wasser einen $a_w$-Wert von 1 hat. Absolut wasserfreie Materialien haben einen $a_w$-Wert von 0. Bakterien benötigen einen $a_w$-Wert von mindestens 0,91, damit sie sich vermehren können. Staphylococcus aureus kann auch bei einem $a_w$-Wert von 0,86 bis 0,90 überleben. Hefen benötigen zur Vermehrung mindestens einen $a_w$-Wert von 0,88 bis 0,94, während Schimmelpilze schon bei einem $a_w$-Wert von 0,80 bis 0,85 wachsen können. Bei vorbefeuchteten Schwammtüchern mit einem $a_w$-Wert von über 0,80 besteht daher die Gefahr, dass sich die genannten Mikroorganismen ausbreiten. Das gilt besonders, wenn sich die Schwammtücher in einer wasserdampfdichten Verpackung befinden und die Lagertemperatur erhöht ist.

Die oben genannte Aufgabe läßt sich daher in vollem Umfang lösen, wenn der Anteil an frei verfügbarem Wasser in dem Schwammtuch so weit abgesenkt wird, dass der $a_w$-Wert weniger als 0,80 beträgt. Die übrigen Eigenschaften des Schwammtuchs, insbesondere die Feuchtdicke und die mechanische Stabilität, sollen durch diese Maßnahme nicht beeinträchtigt sein.

Gegenstand der vorliegenden Anmeldung ist somit ein biozid-freies, mit einem hygroskopisch wirkenden anorganischen Salz vorbefeuchtetes Schwammtuch auf Basis von regenerierter Cellulose, das mit Fasern und/oder einem Netz mechanisch verstärkt ist, wobei das hygroskopisch wirkende anorganische Salz Magnesiumchlorid ist und der Wasseranteil in dem Schwammtuch 75 bis 200 Gew.-% beträgt, bezogen auf das Trockengewicht des Schwammtuchs, dadurch gekennzeichnet, dass es mindestens eine Substanz, ausgewählt aus der Gruppe bestehend aus weiteren anorganischen Salzen, Zuckern, Zuckerestern, ein- oder mehrwertigen Carbonsäuren, und hydrophilen Polymeren, enthält in einer Menge, die ausreicht um in dem Schwammtuch einen aw- Wert von weniger als 0,8 einzustellen, wobei das Magnesiumchlorid in 20 bis 22 gew.-%iger wässriger Lösung eingesetzt wird. Das erfindungsgemäße Schwammtuch enthält kein Fungizid, Bakterizid oder sonstiges Biozid, das in Anhang II, Teil 1, der *Verordnung (EU) Nr. 1062/2014 vom 4.8.2014 über das Arbeitsprogramm zur systematischen Prüfung aller in Biozidprodukten enthaltenen alten Wirkstoffe gemäß der Verordnung (EU) Nr. 528/2012* für Schutzmittel für Produkte während der Lagerung sowie für Schutzmittel für Fasern, Leder, Gummi und polymerisierte Materialien, d.h. für die Produktarten 6 und 9, aufgeführt ist und dementsprechend deklariert werden muss. Ein entsprechender Auszug des Anhangs II, Teil 1, der Verordnung ist dieser Anmeldung beigefügt. Im Zusammenhang mit der vorliegenden Erfindung wird ein solches Schwammtuch als "biozid-frei" bezeichnet.

Das erfindungsgemäße Schwammtuch ist allgemein nach dem Viskoseverfahren hergestellt. Das Verfahren ist beispielsweise in der DE-PS 807 439 beschrieben. Dabei wird Viskose mit Glaubersalz-Kristallen zu einer Schwammtuch-Rohmasse vermischt. Der Rohmasse können noch relativ kurze Fasern (Länge der Fasern etwa 2 mm bis 30 mm, bevorzugt 3 bis 6 mm) zugesetzt werden. Die Fasern sind häufig Baumwollfasern (bevorzugt Baumwoll-Kämmlinge), es können auch Fasern aus anderen natürlichen und/oder synthetischen Polymeren eingesetzt werden. Die Fasern dürfen von der stark alkalischen Viskose nicht zu stark angegriffen werden. Die Schwammtuch-Rohmasse wird als flache Schicht auf einem umlaufenden, perforierten Trägerband ausgebracht und auf dem Band in ein erwärmtes Fäll- und Regenerationsbad geführt, in dem die Cellulose aus der Viskose regeneriert wird. Das Glaubersalz weist einen relativ niedrigen Schmelzpunkt von 32 bis 33 °C auf. Es schmilzt daher in dem erwärmten Fäll- und Regenerationsbad und wird herausgelöst. Zurück blieben entsprechende Poren oder Hohlräume in dem Schwammtuch. Anschließend wird das rohe Schwammtuch durch verschiedene Waschbäder sowie (zur Vorbefeuchtung) durch ein Bad mit einer Lösung eines hygroskopischen Salzes, insbesondere einer wäßrigen Magnesiumchlorid-Lösung, geführt. Überschüssige Flüssigkeit wird dann mit Hilfe eines Quetschwalzenpaares aus dem Schwammtuch entfernt.

Der Wasseranteil in dem erfindungsgemäßen Schwammtuch liegt bei 75 bis 200 Gew.-%, bevorzugt bei 100 bis 150 Gew.-%, jeweils bezogen auf das Trockengewicht des Schwammtuchs. Es weist dadurch einen sehr weichen und angenehmen "Griff" auf, was von den Verbrauchern besonders geschätzt wird.

Die Schwammtuch-Rohmasse - mit oder ohne Fasern - kann auch als dünne Schicht auf eine oder beide Seiten eines Netzes aufgebracht werden. Das Netz besteht üblicherweise aus Polyester oder Baumwolle. Das mit der Rohmasse beschichtete Netz wird anschließend durch Fäll-, Regenerations- und Waschbäder geführt.

Es wurde gefunden, dass der $a_w$-Wert auf verschiedene Weise abgesenkt werden kann. In einer Ausführungsform der Erfindung wird der $a_w$-Wert im Schwammtuch unter den Wert von 0,80 gesenkt durch Zugabe von mindestens einem weiteren anorganischen Salz neben dem als Weichmacher dienenden hygroskopischen Salz. Das zusätzliche Salz ist beispielsweise Lithiumchlorid, Natriumchlorid (Kochsalz), Kaliumchlorid, Natriumsulfat, Magnesiumsulfat oder Calciumsulfat. Das weitere anorganische Salz wirkt allgemein nicht hygroskopisch. Der Anteil des weiteren anorganischen Salzes beträgt zweckmäßig 10 bis 30 Gew.-%, bevorzugt 15 bis 25 Gew.-%, jeweils bezogen auf das Trockengewicht des Schwammtuchs.

Allgemein wird das weitere Salz in Form einer Lösung zusammen mit der Lösung des Magnesiumchlorids aufgebracht, beispielsweise indem das Schwammtuch durch eine Tränkwanne mit einer Lösung der verschiedenen Salze geführt wird. Die Salzkonzentration wird so groß gewählt, dass der $a_w$-Wert unter 0,80 sinkt.

In der nachfolgenden Tabelle sind die $a_w$-Werte von gesättigten Lösungen verschiedener Salze zusammengestellt:

| Salz | LiCl | MgCl$_2$ | K$_2$CO$_3$ | Mg(NO$_3$)$_2$ | NaBr | SrCl$_2$ | NaCl | KCl |
|---|---|---|---|---|---|---|---|---|
| $a_w$-Wert | 0,112 | 0,327 | 0,438 | 0,529 | 0,577 | 0,708 | 0,753 | 0,843 |

Als Lösungsmittel in der Lösung der verschiedenen Salze kann Wasser eingesetzt werden, mit besonderem Vorteil wird jedoch ein Gemisch von Wasser und ein- oder mehrwertigen, niedermolekularen Alkoholen eingesetzt.

Niedermolekulare Alkohole sind im Zusammenhang mit der vorliegenden Erfindung Alkohole mit bis zu 6 Kohlenstoffatomen, die neben den Kohlenstoffatomen nur noch Sauerstoff- und Wasserstoffatome enthalten und ausschließlich Hydroxygruppen als funktionelle Gruppen aufweisen. Die ein- oder mehrwertigen Alkohole sind insbesondere Ethanol, n-Propanol, Isopropanol, Ethylenglykol (Ethandiol), Diethylenglykol, Propan-1,2- oder -1,3-diol oder Mischungen davon. Im Zusammenhang mit der vorliegenden Anmeldung soll unter einem mehrwertigen Alkohol ein Alkohol mit bis zu 8 Hydroxygruppen, bevorzugt mit bis zu 6 Hydroxygruppen verstanden werden. Das hygroskopisch wirkende anorganische Salz ist Magnesiumchlorid, welches in einer Menge verwendet wird, die über den bisher bekannten Anteil erhöht wird, bis ein $a_w$-Wert von weniger als 0,8 erreicht ist. Erreicht wird dies durch Imprägnieren des Schwammtuchs mit einer 20 bis 22 gew.-%igen wäßrigen Magnesiumchlorid-Lösung. Der Anteil an Magnesiumchlorid lässt sich nicht wesentlich über 22 Gew.-% erhöhen, da die Lösung sonst zu stark viskos ist und von dem Schwammtuch nur noch schlecht aufgenommen wird.

Eine Verminderung des $a_w$-Wertes auf weniger als 0,80 wird durch den Zusatz von Zuckern, Zuckerestern, ein- oder mehrwertigen Carbonsäuren, Estern von ein- oder mehrwertigen Carbonsäuren oder Gemischen davon erreicht. Die Zucker sind allgemein Mono- oder Disaccharide. Der Anteil an Zuckern bzw. Zuckerestern ist so bemessen, dass das Schwammtuch nicht klebrig ist und dass die Poren des Schwammtuches offen bleiben. Die genannten Mittel können mit Salzen und/oder den ein- oder mehrwertigen Alkoholen kombiniert werden.

Schließlich kann das erfindungsgemäße Schwammtuch auch hydrophile Polymere enthalten. Auch diese tragen zur Absenkung des $a_w$-Werts bei. Geeignete hydrophile Polymere sind Oligo- und Polysaccharide sowie Derivate davon, beispielsweise Fructane und Levane, Chitosan, Carrageenan, Pektine und Alginate sowie Derivate davon, beispielsweise Propylenglykol-alginat. Geeignet sind auch Celluloseether, wie Carboxyalkylcellulose (beispielsweise Carboxymethylcellulose), Hydroxyalkylcellulose, (beispielsweise Hydroxyethyl- und Hydroxypropylcellulose) und Alkyl-hydroxyalkylcellulose (beispielsweise Methyl-hydroxyethyl-cellulose und Ethyl-hydroxypropylcellulose). Geeignet sind ferner synthetische hydrophile Polymere, wie Polyvinylpyrrolidon und Copolymere mit Vinylpyrrolidon-Einheiten, Polymere aus sowie Copolymere mit Einheiten aus Dimethylaminoethyl(meth)acrylaten, Poly(meth)acrylsäure und Polylactide. Die Löslichkeit der hydrophilen Polymere in Wasser läßt sich gegebenenfalls mit niedermolekularen Vernetzern, wie Glyoxylsäure, einstellen ("niedermolekular" bedeutet in diesem Zusammenhang ein Molekulargewicht von weniger als 300 g/mol). Der Anteil der hydrophilen Polymere kann bis zu 15 Gew.-% betragen, bevorzugt ist ein Anteil von 5 bis 10 Gew.-%, jeweils bezogen auf das Trockengewicht des Schwammtuchs.

In dem erfindungsgemäßen Schwammtuch können $a_w$-Wert-senkende Mittel aus zwei oder mehr der oben beschriebenen Gruppen kombiniert sein. Es weist in jedem Fall einen $a_w$-Wert von weniger als 0,80 auf und benötigt dementsprechend kein deklarationspflichtiges Biozid mehr.

Die nachfolgenden Beispiele dienen zur Illustration der Erfindung. Prozente sind darin als Gewichtsprozente zu verstehen, soweit nicht anders angegeben oder aus dem Zusammenhang unmittelbar ersichtlich.

Zur Bestimmung des $a_w$-Wertes wurde ein $a_w$-Wert-Messer, Modell 5803.056, der G. Lufft Mess- und Regeltechnik GmbH, D-70736 Fellbach, eingesetzt. Die Eichung des Meßgeräts erfolgte mit Spezialpapier, das mit einer gesättigten wäßrigen Bariumchlorid-Lösung tropfnass befeuchtet war, bei einer Temperatur von 20 °C. Bei der Messung stellte sich der endgültige $a_w$-Wert nach etwa 2,5 bis 3 Stunden bei konstanter Temperatur ein. Bei abweichender Messtemperatur wurde der für 20 °C geltende $a_w$-Wert durch die dem Messgerät beiliegende Korrekturtabelle ermittelt. Bei einer Abweichung von ± 1 °C ist eine Korrektur des $a_w$-Wertes von ± 0,002 zu berücksichtigen. Die Korrekturtabelle gilt im Bereich von 15 bis 25 °C. Sämtliche in den nachfolgenden Beispielen und in den übrigen Teilen der vorliegenden Anmeldung genannten $a_w$-Werte beziehen sich auf eine Temperatur von 20 °C.

Beispiel 1 (Schwammtuch imprägniert mit Magnesiumchlorid-Lösungen verschiedener Konzentration, ohne Biocid):

Ein nach dem Viskoseverfahren hergestelltes Schwammtuch mit einer Verstärkung aus Baumwollfasern wurde in wäßrige Magnesiumchloridlösungen verschiedener Konzentration gelegt und anschließend abgequetscht, um überschüssige Lösung zu entfernen. Die mit den Magnesiumchlorid-Lösungen zunehmender Konzentration imprägnierten Schwammtücher sind im folgenden als Proben 1 bis 5 bezeichnet, wobei Proben 1 und 2 zum Vergleich dienen. Wäßrige Lösungen, die mehr als 22 Gew.-% $MgCl_2$ enthalten, wurden von dem Schwammtuch nicht mehr ausreichend aufgenommen.

| Probe Nr. | Anteil an $MgCl_2$ in der Lösung [Gew.-%] | $a_w$-Wert |
|---|---|---|
| 1 | 16,1 | 0,85 |
| 2 | 18,1 | 0,825 |
| 3 | 20,0 | 0,78 |
| 4 | 22,0 | 0,75 |

In Anlehnung an die Methode AATCC 100 wurden die antimikrobiellen Eigenschaften der einzelnen Proben untersucht.

Dazu wurde jeweils 0,5 ml einer Suspension von Escherichia coli (DSM 1576) in einer 0,9 %igen wäßrigen NaCl-Lösung auf die einzelnen Schwammtuch-Prüflinge (Kantenlänge 2 cm) aufgebracht und die Proben einzeln in sterilen Petrischalen bei einer Temperatur von 36 °C 24 Stunden lang gelagert. Danach wurden die Keime in 10 ml BD D/E Neutralisationslösung von den Prüflingen abgelöst und mittels Plattenguss die Keimzahl bestimmt. Alle Untersuchungen erfolgten als Dreifachbestimmung. Eine zusätzliche Sterilisation der Proben wurde nicht durchgeführt.

Nährmedium:                CASO-Agar
Dauer der Bebrütung:       2 Tage
Die Abnahme der Keimzahl wurde wie folgt berechnet:
bezogen auf die Ausgangskeimzahl:

$$\% \text{ Abnahme} = \frac{(T_o - T_x)}{T_o} \times 100$$

wobei

$T_o$ die Keimzahl pro Prüfling bedeutet, unmittelbar nach dem Beimpfen, und
$T_x$ die Keimzahl pro Prüfling nach 24 Stunden Bebrütung.

Die Ergebnisse sind in der nachfolgenden Tabelle zusammengestellt:

| Probe Nr. | Kontaktzeit [h] 0 = Ausgangs-wert | KbE*/Prüfling | Mittelwert Reduktion [%] | Standardabweichung [%] |
|---|---|---|---|---|
| 1 | 0 | $1,15 \times 10^5$ | -- | -- |
|  | 24 | $2,01 \times 10^4$ | 81,30 | 8,03 |
| 2 | 0 | $1,11 \times 10^5$ | -- | -- |
|  | 24 | $9,00 \times 10^3$ | 91,64 | 1,86 |
| 3 | 0 | $1,08 \times 10^5$ | -- | -- |
|  | 24 | $8,53 \times 10^3$ | 92,07 | 1,34 |
| 4 | 0 | $9,87 \times 10^5$ | -- | -- |
|  | 24 | $7,17 \times 10^3$ | 93,34 | 1,15 |
| * KbE = Koloniebildende Einheit | | | | |

Aus den Daten ergibt sich, dass die maximale antimikrobielle Wirksamkeit erst erreicht ist, wenn das Schwammtuch mit einer 20 bis 22 gew.-%igen wäßrigen $MgCl_2$-Lösung imprägniert wurde.

Beispiel 2 (Schwammtuch imprägniert mit Magnesiumchloridlösung ohne zusätzliches Biocid und Schwammtuch, imprägniert mit einer Weichmacherlösung, die Magnesiumchlorid und ein Biocid enthält):

Untersucht wurden Proben der folgenden vorbefeuchteten Schwammtücher:

| Probe | Weichmacher-Lösung | Farbe / Breite des Schwammtuchs [mm] | $MgCl_2$-Konzentration in der Weichmac her-Lösung [Gew.-%] | $a_w$-Wert | Art des Biocids bzw. Fungizids | Menge des Biocids bzw. Fungizids |
|---|---|---|---|---|---|---|
| 1 | $MgCl_2$ + VE-Wasser | gelb /180 | 18,30 | 0,82 | ®Vantocil IB Microbiocid 20 % | 10 g Fungizid in 2000 g Lösung, ca. 1000 ppm |
| 2 | $MgCl_2$ + VE-Wasser | rot / 180 | 18,30 | 0,82 | ®Omacide IPBC 30 DPG, ca. 30 % | 7 g Fungizid in 2000 g Lösung, ca. 1000 ppm |
| 3 | $MgCl_2$ + VE-Wasser | blau / 180 | 18,30 | 0,82 | ®Bardac 2240, 12,50 % | 16 g Fungizid in 2000 g Lösung, ca. 1000 ppm |
| 4 | $MgCl_2$ + VE-Wasser | türkis / 180 | 18,30 | 0,82 | --- | --- |
| 5 | $MgCl_2$ + Fabrikwasser | weiß / 180 | 18,30 | 0,82 | --- | --- |

Geprüft wurde die Widerstandsfähigkeit der Proben gegenüber dem Schimmelpilz Aspergillus niger (DSM 1957). Die Prüfung erfolgte gemäß DIN 53 931. "VE-Wasser" steht für vollentsalztes Wasser.

Dabei wurde eine Sporensuspension des Schimmelpilzes auf wachstumsfördernde Nährmedien aufgebracht und 24 Stunden lang bebrütet, um ein Auskeimen der Sporen zu ermöglichen. Anschließend wurden runde Prüfstücke der Proben mit einem Durchmesser von 4 cm auf die beimpften Nährböden ausgelegt. Nach einer 14-tägigen Lagerung bei 29 ± 1°C unter feuchten Bedingungen erfolgte eine visuelle und makroskopische Bewertung des Schimmelpilzwachstums auf den Prüflingen und dem umgebenden Nährmedium.

Sämtliche Probenstücke zeigten eine Hemmhofbildung (bewuchsfreie Zone im Umkreis der Probe). Auf der Oberfläche des umgebenden Nährmediums war ein starker Bewuchs mit Schimmelpilzen sowie eine starke Sporenbildung erkennbar.

Aus den Versuchen ergibt sich, dass der Zusatz eines Biocids die Widerstandsfähigkeit des Schwammtuchs gegenüber Schimmelpilzen nicht verbessert, wenn die Konzentration an Magnesiumchlorid in der Weichmacherlösung ausreichend hoch ist. Die Verwendung von Fabrikwasser anstelle von vollentsalztem Wasser (VE-Wasser) führte zu keiner Änderungen der fungiziden Eigenschaften.

Beispiel 3 (Schwammtücher, die mit einer Mischung aus $MgCl_2$ und anderen Salzen imprägniert sind):

| Probe | Salze in der wässrigen Weichmacherlösung | Farbe/Breite des Schwammtuchs | Konzentration in der WeichmacherLösung [Gew.-%] | $a_w$-Wert | Zusammensetzung der Mischung |
|---|---|---|---|---|---|
| 6 | $MgCl_2$ + NaCl | gelb / 210 mm | $MgCl_2$, 30 %ig 1 kg NaCl + 3 l VE-Wasser | 0,71 | 3780 ml $MgCl_2$-+ 2850 ml NaCl-Lösung |
| 7 | $MgCl_2$ + $Na_2SO_4$ | orange / 180 mm | $MgCl_2$, 30 %ig 500 g Glaubersalz + 3 l VE-Wasser | 0,82 | 3780 ml $MgCl_2$-+ 2850 ml $Na_2SO_4$-Lösung |

Die Widerstandsfähigkeit der Proben gegenüber dem Schimmelpilz Aspergillus niger (DSM 1957) erfolgte gemäß DIN 53 931, wie im Beispiel 2 beschrieben. Diese Art der Belastung ist jedoch extrem und tritt so unter Praxisbedingungen nicht auf.

Bei der Probe 6 zeigte sich nach einer Woche Lagerung ein starker Bewuchs mit starker Sporenbildung vom Rand her (weniger als 25 % der Probenoberfläche waren bewachsen); nach 2 Wochen Lagerung war die Probenoberfläche vollständig (100%) bewachsen.

Bei Probe 7 war nach einer Woche Lagerung die Probe vom Rand her stark bewachsen mit starker Sporenbildung (weniger als 25 % der Probenoberfläche waren bewachsen); nach 2 Wochen Lagerung war die Probenoberfläche mit einzelnen Kolonien bewachsen (25 bis 75 % der Probenoberfläche waren bewachsen). Aus den Ergebnissen ergibt sich, dass die antimikrobielle Wirksamkeit je nach Art des Salzes verschieden ist.

Daneben wurde die antimkrobielle Wirksamkeit der Proben gegenüber Staphylococcus aureus (DSM 799) und Escherichia coli (DSM 1576) geprüft, wie im Beispiel 1 beschrieben. Die Testergebnisse sind in den nachfolgenden Tabellen zusammengestellt:

Testkeim Staphylococcus aureus:

| Probe | Kontaktzeit [h] | KbE/Prüfling | Mittelwert Reduktion [%] | Standardabweichung [%] |
|---|---|---|---|---|
| 6 | 0 | $1,51 \times 10^5$ | -- | -- |
| | 24 | $7,3 \times 10^2$ | 99,53 | 0,08 |
| 7 | 0 | $1,46 \times 10^5$ | -- | -- |
| | 24 | < 10 | $\geq$ 99,99 | 0,00 |

Testkeim Escherichia coli:

| Probe | Kontaktzeit [h] | KbE/Prüfling | Mittelwert Reduktion [%] | Standardabweichung [%] |
|---|---|---|---|---|
| 6 | 0 | $1,01 \times 10^5$ | -- | -- |
| | 24 | $1,30 \times 10^3$ | 98,94 | 0,09 |
| 7 | 0 | $7,97 \times 10^4$ | -- | -- |
| | 24 | $1,67 \times 10^1$ | 99,98 | 0,01 |

Zum Vergleich wurde der $a_w$-Wert bestimmt an bisher üblichen, mit Magnesiumchlorid-Lösungen verschiedener Konzentration vorbefeuchteten Schwammtüchern der Anmelderin, die sämtlich nach dem Viskoseverfahren hergestellt sind und als mechanische Verstärkung Baumwollfasern enthalten, jedoch kein Netz. Die Werte sind in der nachfolgenden Tabelle zusammengestellt. Enthalten sind auch die Daten für ein Schwammtuch, das allein mit Wasser befeuchtet wurde.

| Nr. | MgCl$_2$-Gehalt [%] | $a_w$-Wert | Gewicht lutro*/ feucht [g] | Breite/Länge [mm] | Fläche [m$^2$] | Dicke feucht [mm] | Flächengewichte trocken/ feucht/MgCl$_2$-Lösung [g/m$^2$] |
|---|---|---|---|---|---|---|---|
| 1 | 0 | 0,92 | 1,73/5,7 | -- | 0,0063 | 4,65 | 275/902/627 |
| 2 | 8,1 | 0,89 | 8,54/19,54 | 178,5/199,25 | 0,0356 | 5,5 | 240/549/309 |
| 3 | 16,1 | 0,85 | 8,54/21,19 | 179/198 | 0,0354 | 5,7 | 241/598/357 |
| 4 | 18,1 | 0,83 | 8,58/21,85 | 179/199 | 0,0356 | 5,8 | 241/614/373 |
| *lutro = lufttrocken | | | | | | | |

Bestimmt wurde schließlich auch der $a_w$-Wert von vorbefeuchteten Cellulose-Schwammtüchern, die von Wettbewerbern stammen. Der Magnesiumchlorid-Gehalt in diesen Schwammtücher ist nicht angegeben und wurde nicht bestimmt.

| Nr. | MgCl$_2$-Gehalt [%] | $a_w$-Wert | Gewicht lutro*/feucht [g] | Breite/Länge [mm] | Fläche [m$^2$] | Dicke feucht [mm] | Flächengewichte trocken/feucht/ MgCl$_2$-Lösung [g/m2] |
|---|---|---|---|---|---|---|---|
| 5)[1] | n.a. | 0,88 | 10,33/30,22 | 190/204 | 0,0388 | 5,0-6,3 | 267/780/513 |
| 6)[2] | n.a. | 0,89 | 10,76/29,87 | 192/205 | 0,0394 | 5,4 | 273/759/486 |
| 7)[3] | n.a. | 0,84 | 9,31/32,74 | 181/199 | 0,0360 | | 258/909/650 |
| 8)[4] | n.a. | 0,83 | -/5,55 | -/- | 0,0063 | 4,7 | -/870/- |
| *lutro = lufttrocken | | | | | | | |
| )[1]: Spontex AquaPur, apfelgrün | | | | | | | |
| )[2]: Spontex AquaPur, rot | | | | | | | |
| )[3]: Wettex Vileda Original, gelb | | | | | | | |
| )[4]: Wettex Vileda Original, blau | | | | | | | |

Auszug aus dem Anhang II, Teil 1, der Verordnung (EU) Nr. 1062/2014 vom 04.08.2014

| Bezeichnung des Stoffs | CAS-Nummer | 6 | 9 |
|---|---|---|---|
| Monohydrochlorid des Polymers aus N,N'''-1,6-Hexandiylbis[N'-cyanoguanidin] (EINECS 240-032-4) und Hexamethylendiamin (EINECS 204-679-6)/Poly-hexamethylenbiguanid (Monomer: 1,5-Bis(trimethylen)guanylguanidin Monohvdrochlorid) (PHMB) | 27083-27-8/ 32289-58-0 | x | x |
| Reaktionsmasse von Titandioxid und Silberchlorid | Nicht verfügbar | x | x |
| Gemisch aus 5-Chlor-2-methyl-2H-isothiazol-3-on (Einecs 247-500-7) und 2-Methyl-2H-isothiazol-3-on (Einecs 220-239-6) Gemisch aus CMIT/MIT) | 55965-84-9 | x | |
| cis-1-(3-Chlorallyl)3,5,7-triaza-1-azonia-adamantanchlorid (cis-CTAC) | 51229-78-8 | x | |
| 2-Butyl-benzo[d]isothiazol-3-on (EBIT) | 4.7.4299 | x | x |
| Natrium N-(hydroxymethyl)glycinat | 70161-44-3 | x | |
| Didecyldimethylammoniumchlorid | 68424-95-3 | x | |
| 3,3'-Methylenbis[5-methyloxazolidin] (Oxazolidin/MBO) | 66204-44-2 | x | |
| Tetrakis(hydroxymethyl)phosphonium-sulfat (2:1) (THPS) | 55566-30-8 | x | |

(fortgesetzt)

| Bezeichnung des Stoffs | CAS-Nummer | 6 | 9 |
|---|---|---|---|
| 2-Brom-2-(brommethyl)pentandinitril (DBDCB) | 35691-65-7 | x | |
| 2-Octyl-2H-isothiazol-3-on (OIT) | 26530-20-1 | x | x |
| α,α',α"-Trimethyl-1,3,5-triazin-1,3,5(2H,4H,6H)-triethanol (HPT) | 25254-50-6 | x | |
| Kalium-(E,E)-hexa-2,4-dienoat (Kalium-sorbat) | 24634-61-5 | x | |
| p-[(Diiodmethyl)sulfonyl]toluol | 20018-09-1 | x | x |
| Natrium p-chlor-m-kresolat | 15733-22-9 | x | x |
| (Benzyloxy)methanol | 14548-60-8 | x | |
| Kalium 2-biphenylat | 13707-65-8 | x | x |
| Dodecylguanidinmonohydrochlorid | 13590-97-1 | x | |
| Pyrithion-Zink (Zink-Pyrithion) | 13463-41-7 | x | x |
| 2,2-Dibrom-2-cyanacetamid (DBNPA) | 10222-01-2 | x | |
| 7a-Ethyldihydro-1H,3H,5H-oxazolo [3,4-c]oxazol (EDHO) | 7747-35-5 | x | |
| Wasserstoffperoxid | 7722-84-1 | x | |
| Didecyldimethylammoniumchlorid (DDAC) | 7173-51-5 | x | |
| 1,3-Bis(hydroxymethyl)-5,5-dimethylimidazolidin-2,4-dion (DMDMH) | 6440-58-0 | x | |
| N,N'-Methylenbismorpholin (MBM) | 5625-90-1 | x | |
| Tetrahydro-1,3,4,6-tetrakis(hydroxymethyl)imidazo[4,5-d]imidazol-2,5(1H,3H)-dion (TMAD) | 5395-50-6 | x | |
| 2,2',2"-(Hexahydro-1,3,5-triazin-1,3,5-triyl)triethanol (HHT) | 4.4.4719 | x | |
| Methenamin-3-chlorallylchorid (CTAC) | 4080-31-3 | x | |
| Pyridin-2-thiol-1-oxid, Natriumsalz (Natrium-Pyrithion) | 3811-73-2 | x | x |
| (Ethylendioxy)dimethanol (Reaktionsprodukte aus Ethylenglycol und Paraformaldehyd (EGForm)) | 3586-55-8 | x | |
| 2-Methyl-2H-isothiazol-3-on (MIT) | 2682-20-4 | x | |
| 1,2-Benzisothiazol-3(2H)-on (BIT) | 2634-33-5 | x | x |
| 2,2'-Dithiobis[N-methylbenzamid] (DTBMA) | 2527-58-4 | x | |
| N-(3-Aminopropyl)-N-dodecylpropan-1,3-diamin (Diamin) | 2372-82-9 | x | |
| Tetrahydro-3,5-dimethyl-1,3,5-thiadiazin-2-thion (Dazomet) | 533-74-4 | x | |
| Natrium 2-biphenylat | 132-27-4 | x | x |
| 2-Phenoxyethanol | 122-99-6 | x | |
| Glutaral (Glutaraldehyd) | 111-30-8 | x | |
| Hexa-2,4-diensäure (Sorbinsäure) | 110-44-1 | x | |
| Biphenyl-2-ol | 90-43-7 | x | x |
| L-(+)-Milchsäure | 79-33-4 | x | |
| Peressigsäure | 79-21-0 | x | |
| Ameisensäure | 64-18-6 | x | |
| Shlorokresol | 59-50-7 | x | x |
| Bronopol | 52-51-7 | x | x |

(fortgesetzt)

| Bezeichnung des Stoffs | CAS-Nummer | 6 | 9 |
|---|---|---|---|
| Kaliumdimethyldithiocarbamat | 128-03-0 | | x |
| Natriumdimethyldithiocarbamat | 128-04-1 | | x |
| N-(Trichlormethylthio)phthalimid (Folpet) | 133-07-3 | | x |
| Thiuram | 137-26-8 | | x |
| Metam-Natrium | 137-42-8 | | x |
| 2-(4-Thiazolyl)-1H-benzimidazol (Thiabendazol) | 148-79-8 | | x |
| Terbutryn | 886-50-0 | | x |
| Carbendazim | 10605-21-7 | | x |
| (Benzothiazol-2-ylthio)methylthiocyanat (TCMTB) | 21564-17-0 | | x |
| Dimethyloctadecyl[3-(trimethoxysilyl) propyl]ammoniumchlorid | 27668-52-6 | | x |
| Dimethyltetradecyl [3-(trimethoxysilyl) propyl]ammoniumchlorid | 41591-87-1 | | x |
| 3-Iod-2-propinyl butylcarbamat (IPBC) | 55406-53-6 | | x |
| 4,5-Dichlor-2-octylisothiazol-3(2H)-on (4,5-Dichlor-2-octyl-2H-isothiazol-3-on (DCOIT)) | 64359-81-5 | | x |
| Silber-Natrium-Hydrogen-Zirconium-Phosphat | 265647-11-8 | | x |
| Silberzeolith | Entfällt | | x |
| Silberphosphatglas | 308069-39-8 | | x |
| Silber-Zink-Zeolith | 130328-20-0 | | x |
| Silber-Kupfer-Zeolith | 130328-19-7 | | x |
| Adsorbiertes Silber auf Siliciumdioxid (als Nanomaterial in der Form eines stabilen Aggregats mit Primärpartikeln in Nanogröße) | Nicht verfügbar | | x |
| Polyhexamethylenbiguanid | 91403-50-8 | | x |

**Patentansprüche**

**1.** Biozid-freies, mit einem hygroskopisch wirkenden anorganischen Salz vorbefeuchtetes Schwammtuch auf Basis von regenerierter Cellulose, das mit Fasern und/oder einem Netz mechanisch verstärkt ist, wobei das hygroskopisch wirkende anorganische Salz Magnesiumchlorid ist und der Wasseranteil in dem Schwammtuch 75 bis 200 Gew.-% beträgt, bezogen auf das Trockengewicht des Schwammtuchs, **dadurch gekennzeichnet, dass** es mindestens eine Substanz, ausgewählt aus der Gruppe bestehend aus weiteren anorganischen Salzen, Zuckern, Zuckerestern, ein- oder mehrwertigen Carbonsäuren, und hydrophilen Polymeren, enthält in einer Menge, die ausreicht um in dem Schwammtuch einen $a_w$-Wert von weniger als 0,8 einzustellen, wobei das Magnesiumchlorid in 20 bis 22 gew.-%iger wässriger Lösung eingesetzt wird.

**2.** Schwammtuch gemäß Anspruch 1, **dadurch gekennzeichnet, dass** das anorganische Salz Lithiumchlorid, Natriumchlorid, Kaliumchlorid, Natriumsulfat, Magnesiumsulfat und/oder Calciumsulfat ist.

**3.** Schwammtuch gemäß einem oder mehreren der Ansprüche 1 bis 2 , **dadurch gekennzeichnet, dass** der Anteil der weiteren anorganischen Salze 10 bis 30 Gew.-%, bevorzugt 15 bis 25 Gew.-% beträgt, jeweils bezogen auf das Trockengewicht des Schwammtuchs.

**4.** Schwammtuch gemäß einem oder mehreren der Ansprüche 1 bis 3 , **dadurch gekennzeichnet, dass** das hydrophile Polymer ein Oligo- oder Polysaccharid oder ein Derivat davon ist, bevorzugt ein Fructan oder Levan, Chitosan, Carrageenan, Pektin, Alginat oder ein Derivat davon, insbesondere Propylenglykol-alginat, ein Celluloseether, bevorzugt eine Carboxyalkyl-cellulose, eine Hydroxyalkylcellulose oder eine Alkyl-hydroxyalkyl-cellulose, Polyvinylpyrrolidon oder ein Copolymer mit Vinylpyrrolidon-Einheiten, ein Polymer aus oder ein Copolymer mit Einheiten aus Dimethylaminoethyl-(meth)acrylaten, Poly(meth)acrylsäure oder Polylactid.

5. Schwammtuch gemäß einem oder mehreren der Ansprüche 1 bis 4 , **dadurch gekennzeichnet, dass** der Anteil der hydrophilen Polymere bis zu 15 Gew.-%, bevorzugt von 5 bis 10 Gew.-% beträgt, jeweils bezogen auf das Trockengewicht des Schwammtuchs.

6. Schwammtuch gemäß einem oder mehreren der Ansprüche 1 bis 5, **dadurch gekennzeichnet, dass** der Wasseranteil darin bei 100 bis 150 Gew.-% liegt, jeweils bezogen auf sein Trockengewicht.

7. Schwammtuch gemäß einem oder mehreren der Ansprüche 1 bis 6, **dadurch gekennzeichnet, dass** die Länge der Fasern 2 mm bis 30 mm, bevorzugt 3 bis 6 mm, beträgt.

8. Schwammtuch gemäß einem oder mehreren der Ansprüche 1 bis 7 **dadurch gekennzeichnet, dass** die Fasern Baumwollfasern, bevorzugt Baumwoll-Kämmlinge, oder Fasern aus anderen natürlichen und/oder aus synthetischen Polymeren sind.

9. Schwammtuch gemäß einem oder mehreren der Ansprüche 1 bis 8, **dadurch gekennzeichnet, dass** es nach dem Viskoseverfahren hergestellt ist.

## Claims

1. Biocide-free sponge cloth pre-wetted with a hygroscopically acting inorganic salt and based on regenerated cellulose which has been mechanically reinforced with fibres and/or a mesh, wherein the hygroscopically acting inorganic salt is magnesium chloride and the water fraction in the sponge cloth is from 75 to 200 % by weight, based on the dry weight of the sponge cloth, **characterized in that** it contains at least one substance selected from the group consisting of further inorganic salts, sugars, sugar esters, monobasic or polybasic carboxylic acids and hydrophilic polymers in an amount sufficient for setting an $a_w$ value of less than 0.8 in the sponge cloth, wherein the magnesium chloride is used in a from 20 to 22 % strength by weight aqueous solution.

2. Sponge cloth according to Claim 1, **characterized in that** the inorganic salt is lithium chloride, sodium chloride, potassium chloride, sodium sulfate, magnesium sulfate and/or calcium sulfate.

3. Sponge cloth according to one or both of Claims 1 to 2, **characterized in that** the fraction of the further inorganic salts is from 10 to 30 % by weight, preferably from 15 to 25 % by weight, based in each case on the dry weight of the sponge cloth.

4. Sponge cloth according to one or more of Claims 1 to 3, **characterized in that** the hydrophilic polymer is an oligosaccharide or polysaccharide or a derivative thereof, preferably a fructan or levan, chitosan, carrageenan, pectin, alginate or a derivative thereof, more particularly propylene glycol alginate, a cellulose ether, preferably a carboxyalkylcellulose, a hydroxyalkylcellulose or an alkylhydroxyalkylcellulose, polyvinylpyrrolidone or a copolymer having vinylpyrrolidone units, a polymer composed of or a copolymer having units of dimethylaminoethyl (meth)acrylates, poly(meth)acrylic acid or polylactide.

5. Sponge cloth according to one or more of Claims 1 to 4, **characterized in that** the fraction of the hydrophilic polymers is up to 15 % by weight, preferably from 5 to 10 % by weight, based in each case on the dry weight of the sponge cloth.

6. Sponge cloth according to one or more of Claims 1 to 5, **characterized in that** the water fraction therein is from 100 to 150% by weight, based in each case on its dry weight.

7. Sponge cloth according to one or more of Claims 1 to 6, **characterized in that** the length of the fibres is from 2 mm to 30 mm, preferably from 3 to 6 mm.

8. Sponge cloth according to one or more of Claims 1 to 7, **characterized in that** the fibres are cotton fibres, preferably cotton noils, or fibres composed of other natural polymers and/or composed of synthetic polymers.

9. Sponge cloth according to one or more of Claims 1 to 8, **characterized in that** it is produced according to the viscose process.

**Revendications**

1. Tissu éponge préhumidifié, sans biocide, avec un sel anorganique à action hygroscopique, sur la base de cellulose régénérée, qui est renforcé mécaniquement avec des fibres et/ou un filet, dans lequel le sel anorganique à action hygroscopique est du chlorure de magnésium et la proportion d'eau dans le tissu éponge est comprise entre 75 et 200 % en poids par rapport au poids à l'état sec du tissu éponge, **caractérisé en ce qu'**il contient au moins une substance, choisie dans le groupe constitué d'autres sels anorganiques, de sucres, de sucroesters, d'acides carboxyliques mono ou polyvalents, et de polymères hydrophiles, en une quantité qui suffit à obtenir dans le tissu éponge une valeur $a_w$ inférieure à 0,8, dans lequel le chlorure de magnésium est utilisé en solution aqueuse à 20 à 22 % en poids.

2. Tissu éponge selon la revendication 1, **caractérisé en ce que** le sel anorganique est du chlorure de lithium, du chlorure de sodium, du chlorure de potassium, du sulfate de sodium, du sulfate de magnésium et/ou du sulfate de calcium.

3. Tissu éponge selon une ou plusieurs des revendications 1 ou 2, **caractérisé en ce que** la proportion des autres sels anorganiques est comprise entre 10 et 30 % en poids, de préférence entre 15 et 25 % en poids, à chaque fois par rapport au poids à l'état sec du tissu éponge.

4. Tissu éponge selon une ou plusieurs des revendications 1 à 3, **caractérisé en ce que** le polymère hydrophile est un oligosaccharide ou un polysaccharide ou un dérivé de ceux-ci, de préférence un fructane ou levane, chitosane, carraghénane, pectine, alginate ou un dérivé de ceux-ci, en particulier un alginate de polypropylène glycol, un éther de cellulose, de préférence une cellulose carboxyalkylique, une cellulose hydroxyalkylique ou une cellulose alkyl-hydroxyalkylique, une polyvinylpyrrolidone ou un copolymère avec des unités de vinylpyrrolidone, un polymère composé de diméthylaminoéthyl-(méth)acrylates, d'acide poly(méth)acrylique ou de polylactide ou un copolymère avec des unités composées de ceux-ci.

5. Tissu éponge selon une ou plusieurs des revendications 1 à 4, **caractérisé en ce que** la proportion de polymère hydrophile va jusqu'à 15 % en poids, de préférence est comprise entre 5 et 10 % en poids, à chaque fois par rapport au poids à l'état sec du tissu éponge.

6. Tissu éponge selon une ou plusieurs des revendications 1 à 5, **caractérisé en ce que** la proportion d'eau à l'intérieur est comprise entre 100 et 150 % en poids, à chaque fois par rapport à son poids à l'état sec.

7. Tissu éponge selon une ou plusieurs des revendications 1 à 6, **caractérisé en ce que** la longueur des fibres est comprise entre 2 mm et 30 mm, de préférence entre 3 et 6 mm.

8. Tissu éponge selon une ou plusieurs des revendications 1 à 7, **caractérisé en ce que** les fibres sont des fibres de coton, de préférence des blousses de coton, ou des fibres d'autres polymères naturels et/ou de polymères synthétiques.

9. Tissu éponge selon une ou plusieurs des revendications 1 à 8, **caractérisé en ce qu'**il est fabriqué selon le procédé de la viscose.

**IN DER BESCHREIBUNG AUFGEFÜHRTE DOKUMENTE**

**In der Beschreibung aufgeführte Patentdokumente**

- EP 2368936 A2
- DE 29618058 U1
- DE 807439